Europäisches Patentamt

European Patent Office

Office européen des brevets

(11) Publication number: **0 087 466**
**B1**

# (12) EUROPEAN PATENT SPECIFICATION

(45) Date of publication of patent specification: **20.01.88**

(21) Application number: **82902942.0**

(22) Date of filing: **27.08.82**

(86) International application number:
**PCT/US82/01170**

(87) International publication number:
**WO 83/00931 17.03.83 Gazette 83/07**

(51) Int. Cl.⁴: **G 01 N 35/02,** G 01 N 21/01,
G 01 N 37/00

(54) METHOD AND APPARATUS FOR DETECTING SAMPLE FLUID.

(30) Priority: **08.09.81 US 299682**
**10.06.82 US 387124**

(43) Date of publication of application:
**07.09.83 Bulletin 83/36**

(45) Publication of the grant of the patent:
**20.01.88 Bulletin 88/03**

(84) Designated Contracting States:
**CH DE FR GB LI SE**

(56) References cited:
**US-A-3 531 258**
**US-A-3 989 591**
**US-A-4 197 088**

**PATENTS ABSTRACTS OF JAPAN, vol. 5, no.
161, October 16, 1981, page 833 P 84**

(73) Proprietor: **EASTMAN KODAK COMPANY**
**343 State Street**
**Rochester New York 14650 (US)**

(72) Inventor: **JESSOP, Thomas Clifton**
**940 Lake Road**
**Webster, NY 14580 (US)**
Inventor: **DeJAGER, Donald**
**38 Sweet Birch Lane**
**Rochester, NY 14615 (US)**

(74) Representative: **Buff, Michel et al**
**Kodak-Pathé Département des Brevets et
Licences CRT Zone Industrielle
F-71102 Chalon sur Saône Cédex (FR)**

Courier Press, Leamington Spa, England.

## Description

This invention relates to the detection of sample fluid on an analysis slide of the type which is adapted to receive a predetermined quantity of sample fluid and to produce a response proportional to a selected analyte in the fluid. More particularly, the invention relates to a method and apparatus for determining whether a sufficient amount of fluid has been metered onto the analysis slide to produce a suitable response.

Recent developments have provided generally planar analysis slides which are used for the detection of selected analytes in biological fluids. The slides are adapted to be used in automatic high-throughput analyzers. In the processing of such slides, a predetermined amount of biological fluid, for example 10 microliters, is metered onto the slide, and a reflectance reading of the slide is taken after a suitable incubation period. The volume of fluid metered onto the slide must be controlled within certain limits to obtain acceptable test results. Thus, it is important to know if the metering apparatus is functioning within these limits.

Metering devices, for use in clinical apparatus, are adapted to expel fluid from a metering tip by means of a pressure system. One method of determining whether a metering device is functioning properly is to monitor the pressure change in the system as the fluid is being metered. It has been found, however, that such a method is not sufficiently sensitive for the precision tests being performed in most analyzers. Further, this method does not detect whether or not the fluid has been deposited in the proper area of the analysis slide. A metering device having a pressure detector of the type described is disclosed in US—A—4,041,995.

Devices for measuring the moisture content of sheet material, such as paper, are well known. For example, US—A—3,471,698, discloses an infrared absorption analyzer for detecting, on a reflecting surface, the presence of a thin film of a contaminant which has a defined infrared absorption band. Radiation covering selected portions of the infrared spectrum is projected onto, and reflected from, the surface to be tested. The reflected radiation is monitored, to determine the amount of radiation reflected, in that wavelength band in which the contaminant to be detected has a strong infrared absorption; the amount of infrared radiation reflected is also monitored in an adjacent wavelength band in which the contaminant does not show a strong absorption. A comparison of the amount of radiation reflected in the two bands will give an indication of the amount of contaminant present on the surface.

A moisture analyzer, as described above, requires complex optical and sensing devices and is suitable for use in clinical apparatus. Further, several structurally different types of slides are required for the various analytes, and each type of slide has a reflectivity different from the other types. Thus, in certain cases, the reflectivity of a wet slide of one type may be very close to the reflectivity of a dry slide of another type. The apparatus for detecting fluid on analysis slides must be able to correctly process signals from all types of slides.

Japanese application JP—A—5 692 433 discloses a process for detecting a degradation of a lubricant. This process involves the steps of monitoring the reflectivity of a filter paper before and after the lubricant is applied thereto. Presumably, the lubricant degrades as the difference in the monitored reflectivities approaches O. While this technique may be useful in detecting a lubricant degradation, it cannot be used to determine whether the volume of the lubricant applied to the filter paper exceeds or is equal to a desired level. Besides, it is clear that, while other documents disclose other similar apparatus, including US—A—3 471 698 and JP—A—5 692 433, such disclosures relate to different technical problems.

It is an object of the present invention to overcome the above-described problems in prior-art devices, and to provide a novel method and apparatus for determining whether an analysis slide contains sufficient sample fluid to produce suitable test results. The invention is particularly applicable for use with different types of analysis slides for the analysis of biological fluids in which there is a substantial variation in the structural characteristics of the portions of the slides which receive the sample fluid.

In accordance with one aspect of the invention, there is provided an apparatus as claimed in claim 1 for determining whether an analysis slide in a biological fluid analyzer has received a predetermined amount of an analyte-containing aqueous fluid, said apparatus being characterized by:

A — means (62; 62a; 62b, 80; 62c, 82, 86) for projecting radiation of wavelengths absorbed by water onto the slides;

B — sensor means (66, 66a; 66b; 66c) for sensing said radiation upon being reflected and/or transmitted by the slide and for producing an output signal related to the intensity of the reflected and/or transmitted radiation sensed;

C — signal processing means (70—75; 67c, 90, 92—97) for comparing the sensor output signal produced before fluid is metered onto the slide with the sensor output signal produced after fluid has been metered onto the slide and for producing a difference signal related to the difference between said sensor output signals; and

D — means (75; 96) for comparing said difference signal with a reference signal related to said predetermined amount and for producing an indication in the event the compared difference and reference signals indicate that the aqueous fluid received by the slide is less than said predetermined amount.

In accordance with the present invention there is also provided a method for determining whether an analysis slide in a biological fluid analyzer has received a predetermined amount of analyte containing aqueous fluid;

said method being characterized by the steps of: projecting radiation onto a dry slide before the metering of fluid thereon; detecting the intensity of radiation within the absorption band of water reflected from and/or transmitted through said dry slide; projecting radiation onto said slide after the metering of fluid thereon; detecting the intensity of radiation within the absorption band of water reflected from and/or transmitted through said slide after the metering of fluid onto the slide; comparing the difference between the intensity of radiation reflected from and/or transmitted through said dry slide and from said slide after fluid has been metered thereon with a predetermined value within the reflectivity and/or transmittivity range of the slide to determine if sufficient fluid has been metered onto the slide to produce a proper response.

In one embodiment of the invention, a radiation source is adapted to project a beam of radiation onto a surface of an analysis slide supported in the metering position, and a sensor is adapted to detect the intensity of radiation reflected from the slide surface and to produce an output proportional to the intensity. The sensor is adapted to produce a first output as a result of radiation projected on a dry slide and a second output from radiation reflected from a slide after fluid has been metered thereon. The difference between the first and second outputs is compared to a predetermined value, within a range of values for the particular type of slide being used, so that a signal means can be actuated in the event the amount of fluid is not sufficient to produce a proper response.

The disclosed invention is particularly advantageous for use with analysis slides in which the reflectivity of the slide varies from one type of slide to the next. It can be used to determine if an adequate amount of fluid has been deposited on the slide. Detection is made using a single wavelength band, and thus, complex optical and sensing devices are not required.

Embodiments of the present invention will now be described, by way of example, with reference to the accompanying drawings in which:

Fig. 1 is a perspective view of a chemical analyzer of the type which is adapted to employ the invention described herein;

Fig. 2 is a partial perspective view of the metering apparatus used in the analyzer, and showing the position of one embodiment of a drop detector relative to the metering apparatus;

Fig. 3 is a perspective view of an analysis slide and the optical components of another embodiment of a drop detector;

Fig. 4 is an elevational view, partially in section and partially in perspective, of a further embodiment of a drop detector;

Fig. 5 is a schematic view of the optical system of yet another embodiment of the present invention;

Fig. 6a is a diagram showing the signal processing means for the drop detector shown in Fig. 2, and Fig. 6b is a graph of the signal developed by the sensor means in Fig. 6a; and

Fig. 7a is a diagram showing the signal processing means for the drop detector in Fig. 5, and Figs. 7b and 7c show the signal developed by the sensor means in Fig. 7a.

The invention is described hereinafter in connection with an analyzer for performing quantitative chemical analyses of biological fluids, such as blood serum. However, the invention is not so limited, and it can be employed in other types of apparatus where it is necessary to detect fluid metered onto a plurality of different types of substrates.

One form of test element, or analysis slide, for use with the subject invention is disclosed in the commonly-owned US—A—3,992,158. The test element disclosed in this patent is formed as a multi-layer element containing the necessary reagents for reaction with components of a biological fluid, such as blood serum, deposited thereon. Certain reactions colorimetrically produce a change in optical density in the element which is sensed by a reflectometer, the amount of light reflected from the element varying in accordance with the reaction and being indicative of the amount of a particular analyte present in the fluid.

Terms such as "up," "down," "lower," "vertical," "horizontal," "top," and "bottom," as used herein, refer to the orientation of parts when the disclosed apparatus is positioned in its normal operating position.

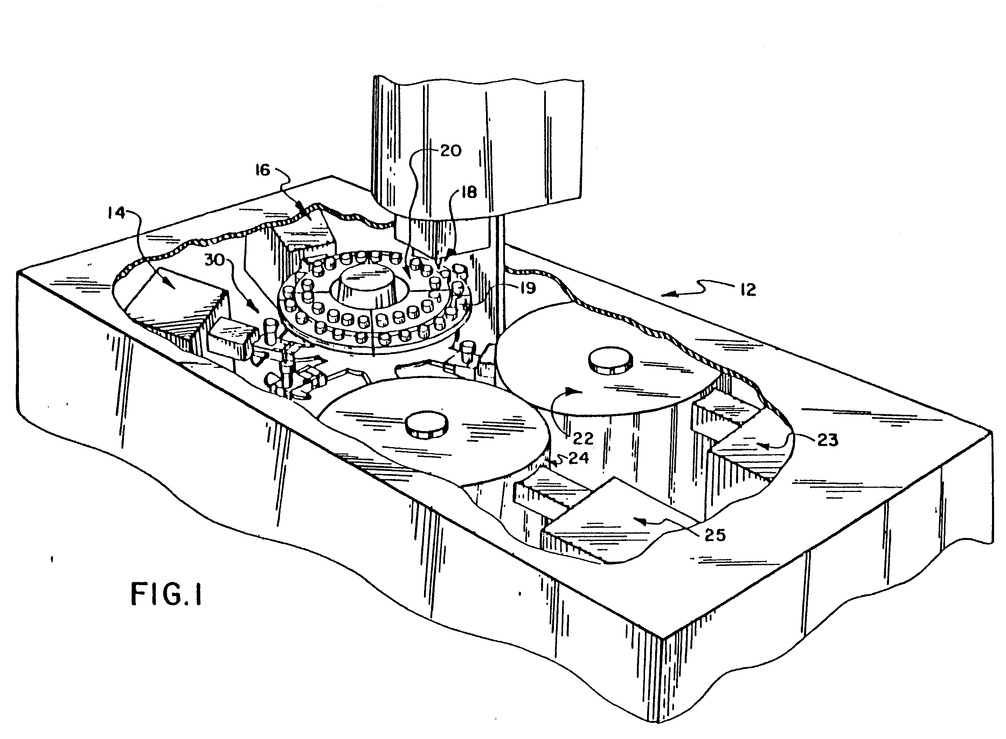

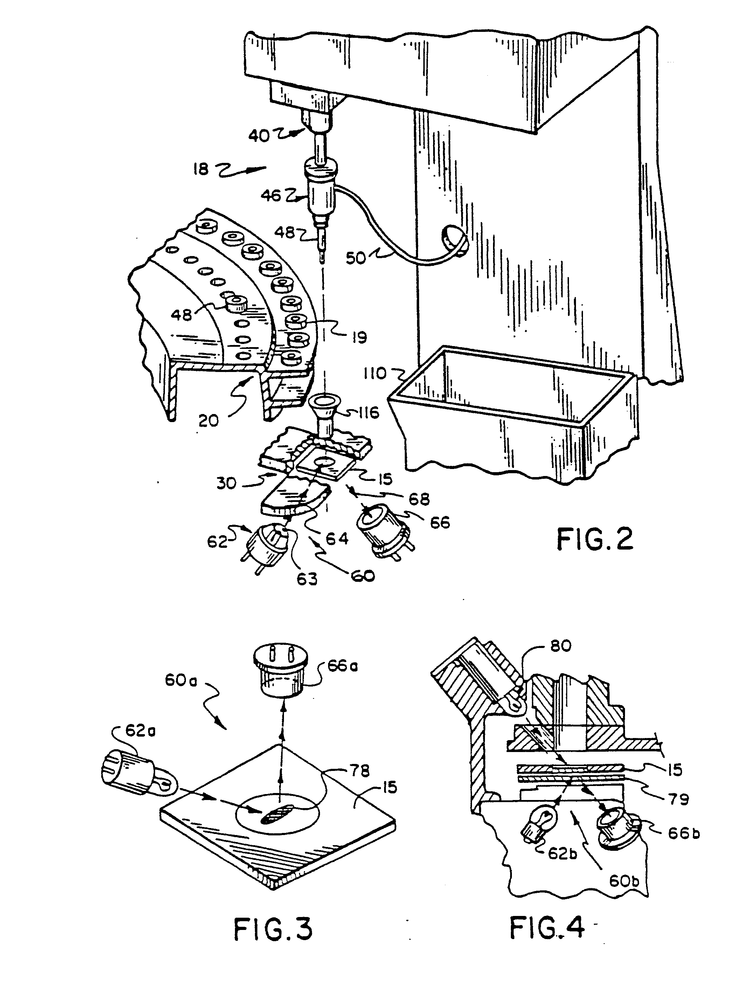

In accordance with the preferred embodiment of the invention, there is shown in Fig. 1 an analyzer 12 of a type which is adapted to utilize test elements in the form of generally planar analysis slides. Analyzer 12 comprises a slide supply 14 for analysis slides 15 of the colorimetric type (Fig. 2), and a slide supply 16 for analysis slides of the potentiometric type (not shown). Metering apparatus 18 is adapted to aspirate sample fluid from a cup 19 supported in a sample tray 20 and to deposit a predetermined amount of the fluid onto an analysis slide supported in a slide distributor 30. A second metering device (not shown) works in conjunction with metering apparatus 18 to also deposit reference fluid on analysis slides of the potentiometric type. After the metering operation, slide distributor 30 deposits analysis slides of the potentiometric type in an incubator 22 and analysis slides 15 in an incubator 24. Incubators 22, 24, are adapted to cooperate respectively with analysis means 23, 25, for measuring a change in the analysis slides as a result of the fluids deposited thereon.

With reference to Fig. 2, metering apparatus 18 comprises a dispenser 40 having a dispenser head 46 which is adapted to receive a disposable metering tip 48 and is connected by means of a line 50 to a pump (not shown). In the metering operation, a position means (not shown) for dispenser 40 is adapted to move the dispenser head 46 to a position over tray 20 where it is lowered to pick up a disposable metering tip 48; head 46 is then moved to a sample cup 19 where it aspirates in a supply of sample fluid. After aspiration of the sample fluid, dispenser head 46 is moved into a guide 116 on distributor 30 which locates the tip 48 relative to a slide 15 in the metering position. When the tip 48 has been located, the metering pump (not shown) is actuated for a preselected period to meter the desired amount of sample fluid onto the analysis slide 15. Tip 48 remains in the metering position for about 1/10 of a second after the metering pump stops to complete the metering operation; then, dispenser 40 is raised to a home position, shown in Fig. 2. In most cases, more than one analysis is performed on a particular sample fluid. If additional analyses are being performed, the dispenser 40 will be raised and lowered for each new slide. After the desired amount of sample fluid has been dispensed, used tips 48 are ejected into a container 110.

With reference to Fig. 2, the drop detector 60 of the subject invention comprises a source of radiation in the form of a miniature incandescent lamp 62 having a lens end 63; lamp 62 is adapted to project a beam of radiation, designated by arrows 64, onto the bottom surface of analysis slide 15. A sensor 66 is adapted to receive reflected radiation, designated by arrows 68, from slide 15. Sensor 66 is a photoelectric cell of the lead sulfide (PbS) type and is equipped with an integral filter (not shown) which passes infrared radiation at a wavelength of 1.945 μm. Radiation at a wavelength of 1.945 μm lies within the absorption band of the water, or moisture, contained in a slide 15. Thus, wet slides are characterized by a relatively weak output of the sensor 66 because the radiation is absorbed by the aqueous sample. The sensor 66 and lamp 62 are oriented relative to slide 15 to receive diffuse reflection from slide 15 and to minimize the specular reflection returned to the sensor 66.

Drop detector 60 detects moisture equally well, viewing from the top or from the bottom of slide 15. Limitations imposed by the analyzer dictate which location is more desirable. The analyzer 12 is configured such that a slide may be viewed dry, that is prior to the metering of sample fluid on the slide, most conveniently by a detector located under a slide 15 in the metering position. A second reading, after the metering operation, may be taken by the same sensor. There is an advantage to being able to compare readings taken before and after fluid has been metered onto slide 15. Slides 15 for different tests have different structural features that change their reflectivity. It is not always possible to distinguish the sensor output produced by a wet slide of one type from the output from a dry slide of another type. Comparing the first reading (dry) to the second reading (wet) on each slide eliminates the effect of the different reflectance characteristics of the various types of slides.

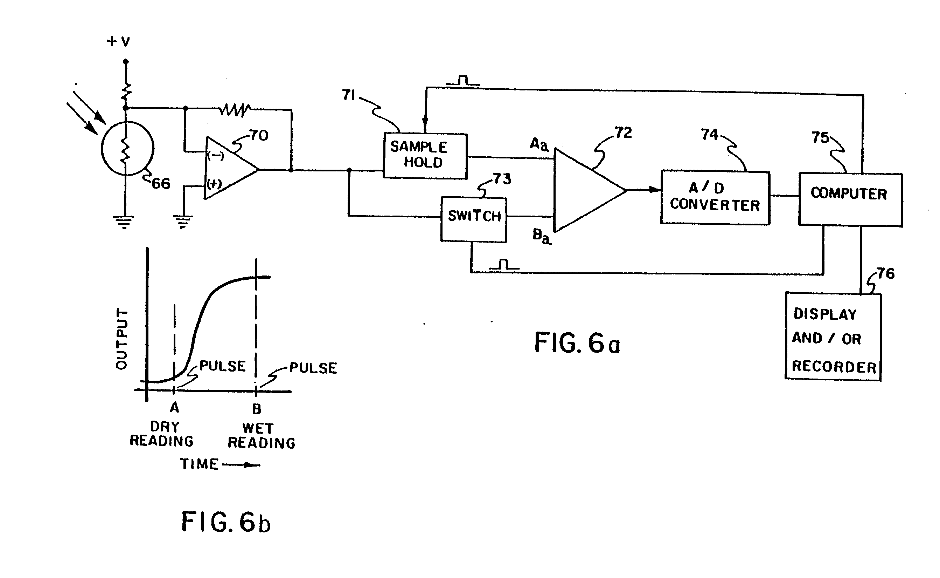

With reference to Fig. 6a, there is shown a means 67 for processing the output from sensor 66. When the resistance of sensor 66 is low, the output delivered to amplifier 70 will be relatively low, as shown at A (dry reading) in Fig. 6b. The output from amplifier 70 for the dry reading is delivered to a sample-and-hold circuit 71 where the output is stored as the result of a trigger pulse from a computer 75. After fluid has been metered on slide 15, radiation reflected from the slide 15 will be less, the resistance of sensor 66 will increase, and the output delivered to amplifier 70 will increase, as shown at B (wet reading) in Fig. 6b. At the appropriate time in the measurement cycle, computer 75 will allow the dry reading stored in the sample-and-hold circuit 71 to appear at input $A_a$ of a differential amplifier 72, and simultaneously, a trigger pulse from computer 75 to switch 73 will deliver the present output of amplifier 70 (wet reading) to input $B_a$ of amplifier 72.

Amplifier 72 receives inputs $A_a$ and $B_a$ and produces an output which is proportional to the difference between the wet and dry readings; this output is delivered to an analog-to-digital converter 74 which produces a digital signal which is fed to the computer 75. The computer 75 compares the difference between wet and dry readings with a stored value to determine if sufficient fluid has been metered on the slide. In the event sufficient fluid has not been metered onto the slide 15, the computer 75 warns the operator of a defective slide by means of a signal to a display device 76.

Computer 75 can be, for example, a programmable microcomputer of a conventional type. The instructions and method of programming such computers are well known in the art, and thus, no further explanation is considered necessary. It will be apparent to those skilled in the art that the output from amplifier 72 could also be fed to a comparator (not shown) which could produce an output directly to display device 76 if predetermined conditions were not satisfied.

An alternative embodiment of the invention is shown in Fig. 3 in which a drop detector 60a comprises a lamp 62a and a sensor 66a which are located above the slide 15.

Another embodiment of the invention is shown in Fig. 4 in which a drop detector 60b comprises a lamp 62b and a sensor 66b, arranged as shown in Fig. 2. An auxiliary radiation source in the form of a lamp 80 has been arranged to project a beam of radiation onto the top of the slide 15, for reasons which will be discussed hereinafter. A filter which passes infrared radiation can be incorporated in sensor 66b, as in sensors 66 and 66a, or the filter can be a separate element, as shown at 79 in Fig. 4. Some types of the analysis slides 15 have been designed with layers that are translucent, rather than with the usual opaque white layer. The effect has been to reduce the signal returned to the sensor from a dry slide. The radiation energy is not reflected, but is partially transmitted through the slide. Thus, the signal difference between the wet and dry readings is small. This small signal difference is of a magnitude approximating the signal difference, in slides of a highly reflective type, between a dry slide and a wet slide which has received only a small drop (e.g. 3 microliters). If the analyzer is set to accept this small signal difference as representing a good drop on the translucent slides, very small drops on other slides will also be accepted. It is desirable to distinguish drops that are 6 microliters, or larger, from drops that are less than 6 microliters; the limit is arbitrary and could be set higher, depending on the sensitivity of the detector.

Lamp 80 is provided to focus light on the top surface of a slide 15 of the type which is translucent. The radiation from lamp 80, in addition to radiation from lamp 62b reflected from the slide, passing through the translucent slide gives a dry reading comparable to a dry slide of a highly-reflective type. When the sample fluid is added to the slide, radiation from both lamps 62b and 80 is absorbed, and the sensor 66b responds with a wet reading comparable with a wet reading from a highly-reflective type of slide. The embodiment shown in Fig. 4 could also operate solely in a transmittance mode, i.e. without lamp 62b, at least with slides having translucent layers as described above. In such an arrangement, sensor 66b would be responding only to radiation transmitted through the slide.

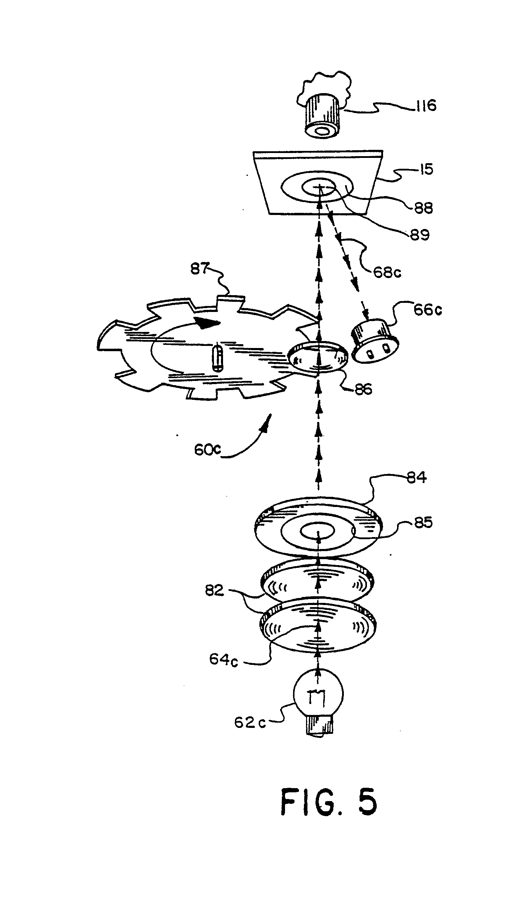

Another embodiment of the invention is shown schematically in Fig. 5. A drop volume detector 60c comprises a lamp 62c which projects radiation in the direction of arrows 64c through condensing lenses 82 which image the lamp filament into the plane of the imaging lens 86. The beam of radiation is defined by a plate 84 having an annular opening 85. Imaging lens 86 focuses the beam onto the slide 15, creating the annular illuminated area 88 shown on slide 15 in Fig. 5. An optical chopper 87 rotatably driven by a motor (not shown) interrupts the beam near the imaging lens 86. The reflected radiation, designated by arrows 68c, is viewed by sensor 66c which produces an output proportional to the intensity of the reflected radiation. Optical chopper 87 causes a pulsating output to be produced by sensor 66c.

The operation of detector 60c depends on the principle that the area of the slide 15 wetted by the sample fluid is proportional to the volume of the sample fluid on the slide. Sensor 66c, which is a lead sulfide cell with an integral narrow band filter (not shown), responds selectively to 1.945 μm wavelength energy. Water in the applied samples strongly absorbs radiation at 1.945 μm wavelengths. The detector 60c is located in the metering station of the analyzer 12 so that a reading may be taken before and after the sample is metered. The amount of energy reflected to the sensor 66c is proportional to the dry area of the slide viewed by the sensor 66c. The output after the sample is dispensed is compared to the output prior to dispensing the sample. The output difference is proportional to the volume of sample on the slide. Apertures define the light beam illuminating the underside of the analysis slide so that an annular area, centered on the slide center is illuminated. The darkened area 89 in the center is sized so that unacceptably small drops fall completely in this shadow area. If no signal difference between wet and dry is observed, then the slide is rejected as a "dry" slide. Signal processing must include the identification of the slide type in order to correctly interpret the signal and correctly predict sample volume.

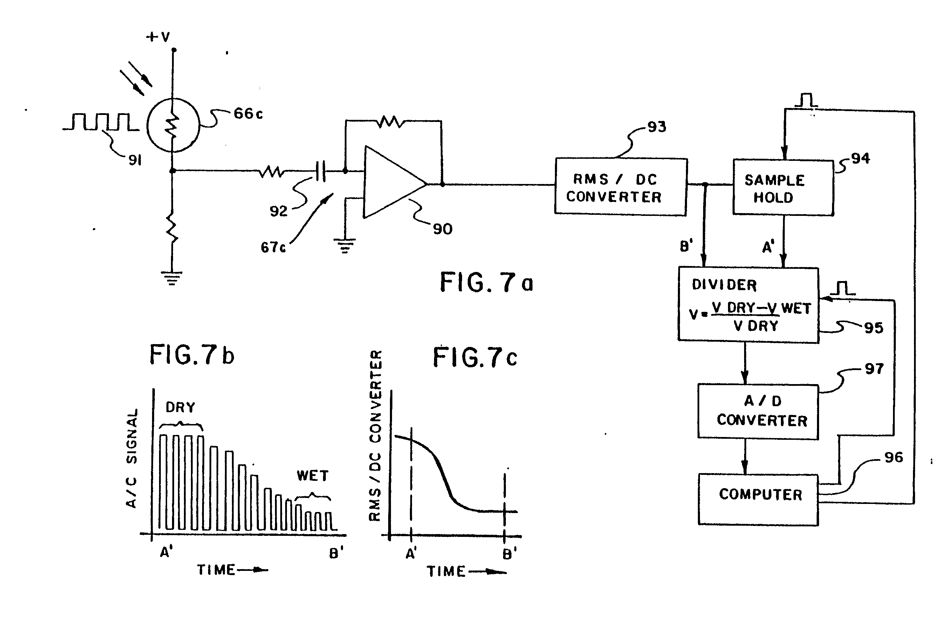

With reference to Fig. 7a, there is shown a means 67c for processing the signal developed in drop detector 60c (Fig. 5). The output from sensor 66c has an AC component having a waveform, shown at 91, and a frequency determined by light chopper 87. The voltage across sensor 66c is monitored by an amplifier 90, with the DC component removed by a capacitor 92 in series with the input to amplifier 90.

The output of amplifier 90 varies between a relatively strong signal for a dry slide and a relatively weak signal for a wet slide, as shown in Fig. 7b. The output from amplifier 90 is fed to an RMS/DC converter 93 which converts the pulsating signal into a continuous signal, as shown in Fig. 7c. The output from converter 93 for the dry reading goes to a sample and hold circuit 94. Suitable pulses from a computer 96 to the sample-and-hold circuit 94 and a divider circuit 95 will feed both dry (A') and wet (B') signals to the divider circuit 95 which produces an output which represents a ratio signal equal to the difference between the dry and wet signals divided by the dry signal. This ratio is delivered to an analog-to-digital converter 97 which feeds the signal in digital form to comparator 96. The ratio for each slide is compared by the computer 96 to a stored value for each particular type of slide in order to determine whether or not the volume of the sample is sufficient.

In the embodiments of applicants' invention described above, wet and dry readings are taken on each slide; this insures that the detector will operate properly over the entire range of reflectivity for each of the different types of slides 15. Under optimum conditions and with suitable programming of the computer, it is possible, with at least a number of similar types of slides, for a determination to be made as to whether sufficient fluid had been metered onto a slide, without first taking a dry reading of the slide.

**Claims**

1. Apparatus for determining whether an analysis slide in a biological fluid analyzer has received a predetermined amount of an analyte-containing aqueous fluid, said apparatus being characterized by:

A — means (62; 62a; 62b, 80; 62c, 82, 86) for projecting radiation of wavelengths absorbed by water onto the slides;

B — sensor means (66, 66a; 66b; 66c) for sensing said radiation upon being reflected and/or transmitted by the slide and for producing an output signal related to the intensity of the reflected and/or transmitted radiation sensed;

C — signal processing means (70—75; 67c, 90, 92—97) for comparing the sensor output signal produced before fluid is metered onto the slide with the sensor output signal produced after fluid has been metered onto the slide and for producing a difference signal related to the difference between said sensor output signals; and

D — means (75; 96) for comparing said difference signal with a reference signal related to said predetermined amount and for producing an indication in the event the compared difference and reference signals indicate that the aqueous fluid received by the slide is less than said predetermined amount.

2. Apparatus according to claim 1 characterized in that said sensor means comprises means responsive to radiation at a wavelength of 1.945 µm.

3. Apparatus according to claim 2, wherein said sensor means comprises a lead sulfide cell having a filter which transmits radiation at 1.945 µm.

4. Apparatus according to claim 1 characterized in that said comparing means (75; 96) comprises a computer having said reference signal stored therein.

5. A method for determining whether an analysis slide in a biological fluid analyzer has received a predetermined amount of analyte-containing aqueous fluid, said method being characterized by the steps of:

projecting radiation onto a dry slide before the metering of fluid thereon;

detecting the intensity of radiation within the absorption band of water reflected from and/or transmitted through said dry slide;

projecting radiation onto said slide after the metering of fluid thereon;

detecting the intensity of radiation within the absorption band of water reflected from and/or transmitted through said slide after the metering of fluid onto the slide;

comparing the difference between the intensity of radiation reflected from and/or transmitted through said dry slide and from said slide after fluid has been metered thereon with a predetermined value within the reflectivity and/or transmittivity range of the slide to determine if sufficient fluid has been metered onto the slide to produce a proper response.

6. A method according to claim 5, characterized in that the intensity of said radiation is detected in the infrared region.

**Patentansprüche**

1. Vorrichtung zur Feststellung, ob auf ein in einem Analysegerät für biologische Flüssigkeiten verwendetes Analyseplättchen eine vorbestimmte Menge einer eine Analysesubstanz enthaltenden wässrigen Flüssigkeit aufgebracht worden ist, gekennzeichnet durch:

A. eine Einrichtung (62; 62a; 62b, 80; 62c, 82, 86), mit der Strahlung, deren Wellenlängen von Wasser absorbiert werden, auf die Analyseplättchen projiziert wird;

B. eine Sensoreinrichtung (66, 66a; 66b, 66c) zur Feststellung der von dem Analyseplättchen reflektierten und/oder durchgelassenen Strahlung, wobei diese Einrichtung ein Ausgangssignal erzeugt, das der Intensität der festgestellten reflektierten und/oder durchgelassenen Strahlung entspricht;

C. eine Signalverarbeitungseinrichtung (70—75; 67c, 90, 92—97), die das vor Aufbringen der Flüssigkeit auf das Analyseplättchen erzeugte Sensorausgangssignal mit dem nach Aufbringen der Flüssigkeit auf das Analyseplättchen erzeugten Sensoraufgangssignal vergleicht und ein der Differenz zwischen den beiden Sensorausgangssignalen entsprechendes Differenzsignal liefert; und

D. eine Einrichtung (75; 96), die das Differenzsignal mit einem der vorbestimmten Menge entsprechenden Bezugssignal vergleicht und eine Anzeige liefert, wenn sich aus dem Vergleich von Differenz- und Bezugssignal ergibt, daß eine kleinere als die vorbestimmte Menge an wässriger Flüssigkeit auf das Analyseplättchen aufgebracht worden ist.

2. Vorrichtung nach Anspruch 1, dadurch gekennzeichnet, daß die Sensoreinrichtung Mittel umfaßt, die auf Strahlung mit einer Wellenlänge von 1,945 µm ansprechen.

3. Vorrichtung nach Anspruch 2, dadurch gekennzeichnet, daß die Sensoreinrichtung eine Bleisulfidzelle mit einem für Strahlung von 1,945 µm durchlässigen Filter umfaßt.

4. Vorrichtung nach Anspruch 1, dadurch gekennzeichnet, daß die Vergleichseinrichtung (75; 96) einen Computer umfaßt, in dem das Bezugssignal gespeichert ist.

5. Verfahren, mit dem festgestellt wird, ob auf ein in einem Analysegerät für biologische Flüssigkeiten verwendetes Analyseplättchen eine vorbestimmte Menge einer eine Analysesubstanz enthaltenden wässrigen Flüssigkeit aufgebracht worden ist, gekennzeichnet durch folgende Verfahrensschritte:

— auf ein trockenes Analyseplättchen wird vor dem Aufbringen der zu analysierenden Flüssigkeit Strahlung projiziert;

— die Intensität der von dem trochenen Analyseplättchen reflektierten und/oder durchgelassenen Strahlung, deren Wellenlänge innerhalb der Absorptionsbande von Wasser liegt, wird festgestellt;

— auf das Analyseplättchen wird nach dem Aufbringen der zu analysierenden Flüssigkeit Strahlung projiziert;

— die Intensität der von dem Analyseplättchen nach dem Aufbringen der zu analysierenden Flüssigkeit reflektierten und/oder durchgelassenen Strahlung, deren Wellenlänge innerhalb der Absorptionsbande von Wasser liegt, wird festgestellt;

— die Differenz zwischen der Intensität der von dem trockenen Analyseplättchen reflektierten und/oder durchgelassenen Strahlung und der von dem Analyseplättchen nach Aufbringen der Flüssigkeit reflektierten und/oder durchgelassenen Strahlung wird mit einem vorbestimmten, im Bereich des Reflexionsvermögens und/oder transmissionsvermögens des Analyseplättchens liegenden Wert verglichen und so festgestellt, ob eine für die gewünschte Reaktion ausreichende Flüssigkeitsdosis auf das Analyseplättchen aufgebracht worden ist.

6. Verfahren nach Anspruch 5, dadurch gekennzeichnet, daß die Intensität der Strahlung im Infrarotbereich ermittelt wird.

## Revendications

1. Appareil pour déterminer si un élément d'analyse dans un analyseur de liquide biologique a reçu une quantité déterminée d'un liquide aqueux contenant un analyte, appareil caractérisé en ce qu'il comprend:

A — des moyens (62; 62a; 62b; 80; 62c, 82, 86) pour irradier l'élément d'analyse au moyen d'un rayonnement absorbé par l'eau déposé sur ledit élément;

B — des moyens de détection (66; 66a; 66b; 66c) pour détecter ledit rayonnement lorsqu'il est réfléchi et/ou transmis par l'élément et pour produire un signal correspondant à l'intensité du faisceau réfléchi et/ou transmis qu'ils reçoivent;

C — des moyens de traitement du signal (70—75; 67c, 90, 92—97) pour comparer ledit signal de sortie produit avant le dépôt du liquide sur l'élément d'analyse avec ledit signal de sortie produit après le dépôt du liquide sur l'élément d'analyse et pour produire un signal de différence qui est fonction de la différence entre lesdits deux signaux de sortie; et

D — un agencement (75; 96) pour comparer ledit signal de différence avec un signal de référence fonction de la dite quantité déterminée et pour produire une indication au cas où la comparaison entre le signal de différence et le signal de référence fait apparaître que la quantité de liquide aqueux déposé sur l'élément d'analyse est inférieure à la quantité déterminée.

2. Appareil conforme à la revendication 1, caractérisé en ce que les moyens de détection comprennent un capteur sensible à un rayonnement dont la longueur d'onde est de 1,945 μm.

3. Appareil conforme à la revendication 2, caractérisé en ce que les moyens de détection comprennent un capteur au sulfure de plomb muni d'un filtre transmettant un rayonnement de 1,945 μm.

4. Appareil conforme à la revendication 1, caractérisé en ce que l'agencement (75; 96) comprend un calculateur contenant ledit signal de référence.

5. Procédé pour déterminer si un élément d'analyse disposé dans un analyseur de liquide biologique a reçu une quantité déterminée d'un liquide aqueux contenant un analyte, procédé caractérisé par les étapes suivantes:

irradier l'élément d'analyse sec avec un rayonnement avant le dépôt du liquide sur ce dernier;

détecter dans la bande d'absorption de l'eau l'intensité du rayonnement réfléchi et/ou transmis par ledit l'élément d'analyse;

irradier l'élément d'analyse avec ledit rayonnement après dépôt du liquide sur ce dernier;

détecter, dans la bande d'absorption de l'eau, l'intensité du rayonnement réfléchi et/ou transmis par ledit élément après dépôt du liquide sur cet élément;

comparer la différence d'intensité entre les signaux réfléchis et/ou transmis par ledit élément avant et après dépôt du liquide sur cet élément avec une valeur déterminée située dans la fourchette des réflectivités et/ou transmitivités dudit élément de manière à déterminer si l'on a déposé suffisamment de liquide afin de fournir une réponse correcte.

6. Procédé conforme à la revendication 5, caractérisé en ce que l'intensité du rayonnement est situé dans l'infrarouge.

FIG.1

0 087 466

0 087 466

FIG.2

FIG.3

FIG.4

2

FIG. 5

FIG.6a

FIG.6b

FIG. 7a

FIG. 7b

FIG. 7c